# EUROPÄISCHE PATENTSCHRIFT

(11) **EP 1 719 961 B1**
(45) Veröffentlichungstag und Bekanntmachung des Hinweises auf die Patenterteilung: **31.03.2010**
(21) Anmeldenummer: 06007123.0
(22) Anmeldetag: 04.04.2006
(51) Int. Cl.: F25B 21/02, H02G 11/02

(54) **Temperaturisoliertes Behältnis**
Thermally insulated container
Récipient muni d'isolation thermique

(30) Priorität: 04.05.2005 DE 202005007181 U
(43) Veröffentlichungstag der Anmeldung: 08.11.2006
(73) Patentinhaber: IPV Inheidener Produktions- und Vertriebsgesellschaft mbH, 35410 Hungen-Inheiden (DE)
(72) Erfinder: Zorn, Manfred, 35418 Büseck (DE)
(74) Vertreter: Heim, Hans-Karl

(56) Entgegenhaltungen:
- US-A- 5 318 107
- US-A- 6 052 862
- PATENT ABSTRACTS OF JAPAN Bd. 1997, Nr. 09, 30. September 1997 (1997-09-30) & JP 09 138047 A (TOKAI RIKA CO LTD), 27. Mai 1997 (1997-05-27)
- PATENT ABSTRACTS OF JAPAN Bd. 1995, Nr. 02, 31. März 1995 (1995-03-31) & JP 06 304051 A (FUJI ELECTRIC CO LTD), 1. November 1994 (1994-11-01)
- PATENT ABSTRACTS OF JAPAN Bd. 1995, Nr. 10, 30. November 1995 (1995-11-30) & JP 07 174457 A (FUJI ELECTRIC CO LTD), 14. Juli 1995 (1995-07-14)

## Beschreibung

Die Erfindung betrifft ein temperaturisoliertes Behältnis gemäß dem Oberbegriff des Anspruchs 1.

Temperaturisolierende Behältnisse dieser Art sind als Kühl-, Wärmeboxen oder Elektrothermotaschen bekannt. Sie weisen Seiten- und Bodenbereiche sowie mindestens einen Deckel- bzw. Verschlussbereich und eine strombetriebene Thermoeinrichtung auf. Zur Versorgung der Thermoeinrichtung besitzen diese Behältnisse ein Strom leitendes Kabel zur Zuführung von elektrischer Energie.

Um das Kabel zu verstauen, wenn es nicht benötigt wird, weisen diese Behältnisse ein Kabelfach auf. Dieses Kabelfach befindet sich meist im Deckel oder im Behältnisunterteil. Um es dort unterzubringen, muss es erst umständlich mit der Hand aufgerollt werden und dann in dem Kabelfach verstaut werden. Da die Kabelfächer nicht sehr groß sind, ist das Unterbringen des zusammengerollten Kabels in diesen Fächern teilweise schwierig und umständlich.

Weiterhin ist an der bekannten Art der Kabelaufbewahrung nachteilig, dass das gesamte Kabel aus dem Kabelfach herausgenommen werden muss, um es zu verwenden. Auch wenn das temperaturisolierte Behältnis in der Nähe des Anschlusses der Stromversorgung steht, ist das Kabel in der gesamten Länge abzuwickeln und auszupacken.

Der Erfindung liegt die **Aufgabe** zugrunde, ein temperaturisoliertes Behältnis zu schaffen, bei dem die Handhabung des Kabels vereinfacht und für den Benutzer komfortabler gestaltet ist.

Diese Aufgabe wird erfindungsgemäß durch ein temperaturisoliertes Behältnis mit den kennzeichnenden Merkmalen des Anspruchs 1 gelöst.
Als ein Kerngedanke ist vorgesehen, dass das Behältnis eine Einrichtung zur automatischen Rückholung und kompakten Aufbewahrung des ausgezogenen Kabels innerhalb oder an der Umfangsform des Behältnisses aufweist.

Weitere vorteilhafte Ausführungsformen sind in den abhängigen Ansprüchen angegeben, wobei das Behältnis als Kühl- oder Wärmebox ausgelegt sein kann.

Durch das Vorsehen einer Einrichtung zur automatischen Rückholung und kompakten Aufbewahrung des Kabels an einem temperaturisolierten Behältnis wird die Handhabung des Stromkabels deutlich vereinfacht. Es ist nicht mehr notwendig, das Kabel aus dem Kabelfach mühsam herauszuholen. Auch kann die Einrichtung zur automatischen Rückholung und kompakten Aufbewahrung deutlich Platz sparender ausgelegt werden, als die herkömmlichen Kabelfächer. Ebenso entfällt das Aufwickeln des Kabels von Hand zum Verstauen. Durch die erfindungsgemäße Rückhol- und Aufbewahrungseinrichtung ist es auch möglich, nur einen Teil des Kabels zu verwenden, und den restlichen Teil des Kabels in der Aufbewahrungseinrichtung zu belassen. Dies ist vor allem im Betrieb in einem KFZ vorteilhaft, da ein zu langes heraushängendes Kabel ein Sicherheitsrisiko darstellen kann. Ein weiterer Vorteil der Rückhol- und Aufbewahrungseinrichtung gegenüber einem separaten Kabel ist, dass das Kabel immer fest mit dem Behältnis verbunden ist und so nicht mehr verloren werden kann. Dies alles macht das Verwenden eines erfindungsgemäßen temperaturisolierten Behältnisses für den Benutzer weitaus komfortabler.

Vorteilhaft ist die Thermoeinrichtung als Peltiereinrichtung ausgelegt. Diese kann sowohl als Kühl- wie auch als Wärmeeinrichtung betrieben werden.

In einer vorteilhaften Ausführungsform ist die Einrichtung zur Rückholung und Aufbewahrung des Kabels modulartig ausgeführt. Durch die Auslegung als Modul ergibt sich der Vorteil, dass ein derartiges Modul separat gefertigt werden kann und später erst in ein temperaturisoliertes Behältnis eingebaut werden kann. Durch die modulartige Aufbewahrung ergeben sich auch Vorteile im Bereich eines internationalen Vertriebes eines solchen Behältnisses. So kann die Einrichtung mit dem Kabel an den jeweiligen Verwendungszweck bzw. für das Verwendungsland angepasst werden. Dies erstreckt sich nicht nur auf den Steckertyp zum Anschluss des Kabels am öffentlichen Stromnetz, sondern auch an eine Anpassung an die jeweiligen örtlichen Gegebenheiten. So kann das Modul auf eine Verwendung im Auto mit 12V, im normalen europäischen Stromnetz mit 240V oder im amerikanischen Netz mit 110V angepasst sein. In diesem Zusammenhang ist es ferner möglich, in dem Modul Strom-, Spannungs- und/oder Frequenztransformatoren vorzusehen, um eine Anpassung an das regionale Stromnetz und die verwendeten Frequenzen zu ermöglichen.

Um die Einrichtung zur Rückholung und Aufbewahrung möglichst effizient zu gestalten, ist es weiter vorteilhaft, dass sie einen Energiespeicher aufweist, der beim Herausziehen des Kabels Energie speichert, die dann als Rückholenergie für das Kabel vorgesehen ist. Dieser Energiespeicher kann beispielsweise als Feder- und/oder als Elastomereinrichtung ausgeführt sein. Durch diese einfache Konstruktion wird zum einen keine externe Energieversorgung für die Rückhol- und Aufbewahrungseinrichtungen benötigt. Zum anderen ist die Einrichtung durch die einfache, wenig komplizierte Ausführung besonders robust ausgelegt, so dass eine Wartung entfallen kann.

Zum Auslösen eines automatischen Rückholvorgangs ist eine Betätigungseinrichtung vorgesehen. Mit Hilfe dieser Betätigungseinrichtung wird die Einrichtung zur Rückholung und Aufbewahrung des Kabels veranlasst, mit der im Energiespeicher gespeicherten Energie das Kabel zurückholend aufzuspulen.

Besonders bevorzugt ist es, wenn das Modul der Einrichtung zur Rückholung und Aufbewahrung eine geringe oder gleiche Stärke wie die Wand des Boden- oder Deckelbereiches oder der Seitenbereiche des Behältnisses aufweist. Hierdurch kann das Modul in oder an den Seiten-, Boden- oder Deckelbereich des Behältnisses angeordnet oder integriert werden, ohne dass das Innenvolumen des Behältnisses verringert wird. Es hat sich als besonders einfach in der Produktion und Handhabung herausgestellt, wenn das Modul der Einrichtung zur Rückholung und Aufbewahrung im Randbereich des Deckels oder Bodens integriert ist. Vorteilhaft ist es, das Modul im Deckelbereich zu integrieren, wenn sich dort auch die Thermoeinrichtung befindet. Ebenso wird das Modul bevorzugt im Bodenbereich untergebracht, sofern die Thermoeinrichtung dort platziert ist.

Um den Austausch eines Moduls zu vereinfachen und die Verwendung verschiedener Module zu fördern, kann das Modul der Einrichtung zur Rückholung und Aufbewahrung am Behältnis anbringbar, insbesondere aufsteckbar, ausgelegt sein. Hierdurch ist es auch für den Endnutzer besonders einfach, die Module auszutauschen und entsprechend der Umgebungsbedingungen zu verwehden. So kann er im KFZ ein anderes Modul, das für 12V ausgelegt ist, verwenden, während er im stationären Betrieb ein Modul für das öffentliche Stromnetz nutzt. Alternativ können auch zwei Module, eines für den Betrieb im KFZ und eines für das öffentliche Stromnetz vorgesehen werden. Auch ist es möglich in dem Modul weiter Energie speichernde Einrichtungen zur Versorgung der Thermoeinrichtung vorzusehen, um einen flexiblen, nicht netzgebundenen Betrieb des Behältnisses zu ermöglichen. Dies ist besonders vorteilhaft, wenn die Thermoeinrichtung als Kühleinrichtung ausgebildet ist.

In einer besonders bevorzugten Ausführungsform ist das Modul als relativ flache Kabelrolle mit Aufrollmechanismus auf Zug am Kabel ausgebildet. Durch diese Konstruktion ist eine Betätigungseinrichtung zum Aufrollen nicht mehr zwingend notwendig. Auch kann das Modul relativ einfach in der Wand des Behältnisses untergebracht werden, ohne dessen Innenvolumen zu beeinträchtigen.

Die Erfindung wird nachfolgend anhand schematischer Zeichnungen näher erläutert. In diesen Zeichnungen zeigen:
- Fig. 1: eine Kühlbox in einer Ansicht schräg von der Seite, mit angedeutetem Modul der Einrichtung zur Rückholung und Aufbewahrung im Bodenbereich;
- Fig. 2: eine Rückansicht einer Kühlbox mit angedeutetem Modul der Einrichtung zur Rückholung und Aufbewahrung im Deckelbereich;
- Fig. 3: eine Seitenansicht einer Kühlbox mit angedeutetem Modul der Einrichtung zur Rückholung und Aufbewahrung in einem Seitenbereich; und
- Fig. 4: eine Seitenansicht einer Kühlbox mit Modul der Einrichtung zur Rückholung und Aufbewahrung, welches an der Rückseite befestigt ist und nicht Teil des beanspruchten Erfindungsgegenstands ist.

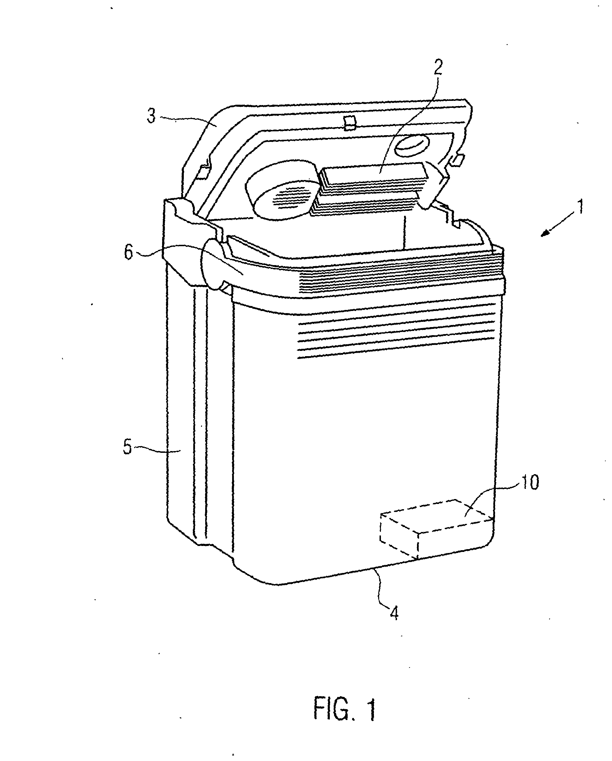

In Fig. 1 ist eine Kühlbox 1 dargestellt, bei der die Thermoeinrichtung 2 als Kühleinrichtung ausgebildet ist. Um die von der Thermoeinrichtung 2 erzeugte Temperatur möglichst gut im Inneren halten zu können, sind der Deckel 3, der Bodenbereich 4 und die Seitenbereich 5 thermoisoliert ausgeführt. Das Modul der Einrichtung zur Rückholung und Aufbewahrung 10 ist in diesem Fall im Bodenbereich 4 angebracht. Die gestrichelten Linien verdeutlichen, dass sich das Modul innerhalb des Außenumfangs der Kühlbox 1 befindet. Es ist also bis auf einen für die Kabelführung notwendigen Schlitz, der nicht dargestellt ist, für den Benutzer nicht sichtbar. Der Vorteil einer Anbringung der Rückführ- und Aufbewahrungseinrichtung im Bodenbereich und der Kabelausführung von dort ist, dass das Kabel hauptsächlich am Boden verläuft, und so die Stolpergefahr verringert wird.

Der Griff 6 der Kühlbox 1 weist oft eine Verriegelungsfunktion auf. Durch Umlegen des Griffes 6 wird der Deckel 3 der Kühlbox 1 verriegelt. Bei einem fest am Deckel 3 befestigten Kabel muss darauf geachtet werden, das Kabel beim Umlegen des Griffes nicht einzuklemmen. Ist das Kabel mittels eines Steckers abnehmbar, muss zum Umlegen des Griffes 6 der Stecker ständig herausgezogen werden. Durch das Modul der Einrichtung zur Rückholung und Aufbewahrung entfallen diese Probleme größtenteils.

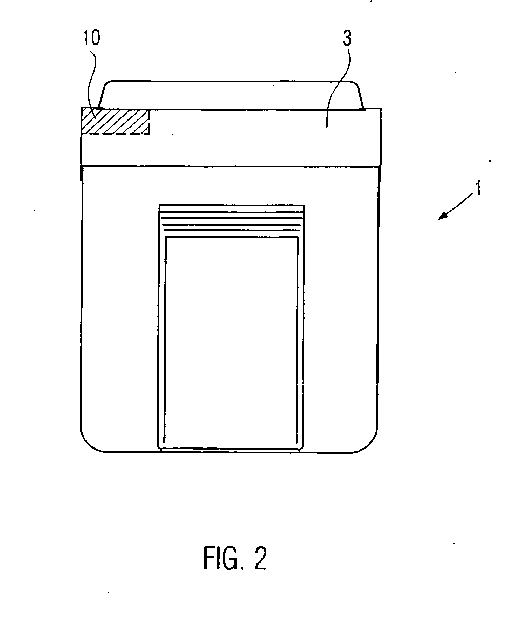

Die Kühlbox 1 aus Fig. 2 weist das Modul der Einrichtung zur Rückholung und Aufbewahrung 10 des Kabels im Deckelbereich 3 auf. Diese Position bietet gegenüber der Ausführungsform aus Fig. 1 den Vorteil, dass der Strom einfacher zur Thermoeinrichtung 2 geleitet werden kann, welche sich ebenfalls am Deckelbereich befindet. Durch die schraffierte Fläche wird angedeutet, dass sich das Modul 10 in einer Ecke des Deckels befindet. Es kann aber auch relativ zentral oder nahe der Seitenfläche angebracht werden. Grundsätzlich muss nur eine Kabelzuführung möglich sein.

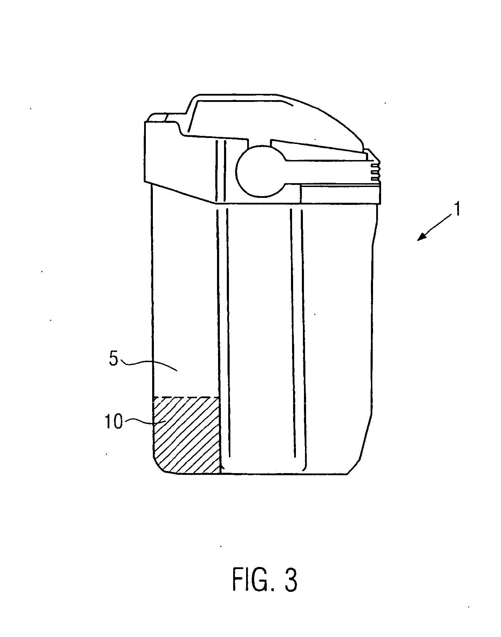

Die schraffierte Fläche in Fig. 3 stellt ein Beispiel für die Integration des Moduls der Einrichtung zur Rückholung und Aufbewahrung 10 im Seitenbereich 5 einer Kühlbox 1 dar. In dem hier dargestellten Fall ist das Modul 10 aufrecht in der Seitenwand 5 integriert. Das Modul 10 befindet sich angrenzend zum Bodenbereich 4. Es ist aber ebenso möglich, das Modul 10 weiter in Richtung Deckelbereich 3 zu integrieren. Dies kann beispielsweise vorteilhaft sein, wenn ein besonderer Standbereich der Kühlbox 1 im Bodenbereich 4 ausgebildet werden soll.

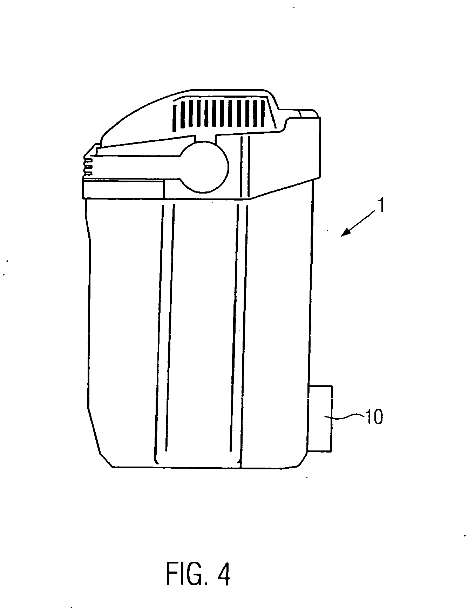

Das Modul 10 in Fig. 4 ist im Gegensatz zu den bisher gezeigten Ausführungsbeispielen nicht in dem Gehäuse der Kühlbox 1 integriert und nicht Gegenstand der Erfindung. Es ist als aufsteckbares Modul 10 an der rückwärtigen Seitenwand 5 integriert. Hierdurch kann ein leichter Austausch des Moduls 10 erreicht werden. Besonders bevorzugt ist in diesem Zusammenhang, wenn das Modul 10 aufsteckbar ausgelegt ist, so dass der Austausch besonders problemlos ausgeführt werden kann.

Das erfindungsgemäße thermoisolierte Behältnis bietet somit eine einfache Möglichkeit, die Handhabung des Kabels zu vereinfachen und für den Benutzer weitaus komfortabler zu gestalten.

## Patentansprüche

1. Temperaturisoliertes Behältnis (1), insbesondere Kühlbox, Wärmebox oder Elektrothermotasche mit Seiten- (5) und Bodenbereichen (4) sowie mindestens einem Deckel- (3) oder Verschlussbereich,
mit einer strombetriebenen Thermoeinrichtung (2), und
mit einem Strom leitenden Kabel zur Zuführung von elektrischer Energie,
**dadurch gekennzeichnet,**
**dass** das Behältnis (1) eine Einrichtung (10) zur automatischen Rückholung und kompakten Aufbewahrung des ausgezogenen Kabels innerhalb der Umfangsform des Behältnisses (1) aufweist.

2. Behältnis nach Anspruch 1,
**dadurch gekennzeichnet,**
**dass** die Thermoeinrichtung als Kühl- und/oder Wärmeeinrichtung, insbesondere als eine Peltiereinrichtung, ausgeführt ist.

3. Behältnis nach einem der Ansprüche 1 oder 2,
**dadurch gekennzeichnet,**
**dass** die Einrichtung (10) zur Rückholung und Aufbewahrung des Kabels modulartig ausgelegt ist.

4. Behältnis nach einem der Ansprüche 1 bis 3,
**dadurch gekennzeichnet,**
**dass** die Einrichtung (10) zur Rückholung und Aufbewahrung einen Energiespeicher aufweist, der beim Herausziehen des Kabels Energie speichert, die als Rückholenergie für das Kabel vorgesehen ist.

5. Behältnis nach einem der Ansprüche 1 bis.4,
**dadurch gekennzeichnet,**
**dass** eine Betätigungseinrichtung für das automatische Rückholen vorgesehen ist.

6. Behältnis nach einem der Ansprüche 1 bis 5,
**dadurch gekennzeichnet,**
**dass** der Energiespeicher als Federeinrichtung und/oder als Elastomereinrichtung ausgeführt ist.

7. Behältnis nach einem der Ansprüche 1 bis 6,
**dadurch gekennzeichnet,**
**dass** das Modul der Einrichtung (10) zur Rückholung und Aufbewahrung einen Strom-, Spannungs- und/oder Frequenztransformator aufweist.

8. Behältnis nach einem der Ansprüche 1 bis 7,
**dadurch gekennzeichnet,**
**dass** das Modul der Einrichtung (10) zur Rückholung und Aufbewahrung eine geringere oder gleiche Stärke wie die Wand des Boden- (4) oder Deckelbereiches (3) oder der Seitenbereiche (5) des Behältnisses (1) aufweist.

9. Behältnis nach einem der Ansprüche 1 bis 8,
**dadurch gekennzeichnet,**
**dass** das Modul der Einrichtung (10) zur Rückholung und Aufbewahrung im oder am Seiten- (5), Boden- (4) oder Deckelbereich (3) angeordnet oder integriert ist.

10. Behältnis nach einem der Ansprüche 1 bis 9,
**dadurch gekennzeichnet ,**
**dass** das Modul der Einrichtung (10) zur Rückholung und Aufbewahrung im Randbereich des Deckels (3) oder Bodens (4) integriert ist.

11. Behältnis nach einem der Ansprüche 1 bis 9,
**dadurch gekennzeichnet,**
**dass** das Modul der Einrichtung (10) zur Rückholung und Aufbewahrung am Behältnis (1) anbringbar, insbesondere aufsteckbar ausgelegt ist.

12. Behältnis nach einem der Ansprüche 1 bis 11,
**dadurch gekennzeichnet,**
**dass** das Modul (10) als relativ flache Kabelrolle mit Aufrollmechanismus auf Zug am Kabel ausgelegt ist.

13. Behältnis nach einem der Ansprüche 1 bis 12,
**dadurch gekennzeichnet ,**
**dass** die Thermoeinrichtung (2) als Kühleinrichtung ausgebildet ist.

## Claims

1. Thermally insulated container (1), particularly cooling box, heating box or electrothermal hag with side areas (5), bottom area (4) and at least one lid or closure area (3),
having a current-operated thermal device (2) and
provided with a current-conducting cable for supplying electric power,
**characterized in that**
the container (1) has a device (10) for the automatic return and compact storage of the extracted cable within the circumference of container (1).

2. Container according to claim 1,
**characterized in that**
the thermal device is constructed as a cooling and/or heating device, particularly as a Peltier device.

3. Container according to one of the claims 1 or 2,
**characterized in that**
the cable return and storage device (10) has a modular design.

4. Container according to one of the claims 1 to 3,
**characterized in that**
the return and storage device (10) has an energy storage device which, on extracting the cable, stores energy used as return energy for the cable.

5. Container according to one of the claims 1 to 4,
**characterized in that**
there is an actuating device for automatic return purposes.

6. Container according to one of the claims 1 to 5,
**characterized in that**
the energy storage device is designed as a spring and/or elastomer device.

7. Container according to one of the claims 1 to 6,
**characterized in that**
the module of the return and storage device (10) has a current, voltage and/or frequency transformer.

8. Container according to one of the claims 1 to 7,
**characterized in that**
the module of the return and storage device (10) has a smaller or identical thickness to the wall of the bottom area (4), lid area (3) or side areas (5) of container (1).

9. Container according to one of the claims 1 to 8,
**characterized in that**
the module of the return and storage device (10) is placed or integrated in or on the side (5), bottom (4) or lid area (3).

10. Container according to one of the claims 1 to 9,
**characterized in that**
the module of the return and storage device (10) is integrated into the marginal area of lid (3) or bottom (4).

11. Container according to one of the claims 1 to 9,
**characterized in that**
the module of the return and storage device (10) can be fitted and particularly plugged into container (1).

12. Container according to one of the claims 1 to 11,
**characterized in that**
the module (10) is designed as a relatively flat cable reel with a roll-up mechanism under tension on the cable.

13. Container according to one of the claims 1 to 12,
**characterized in that**
the thermal device (2) is constructed as a cooling device.

## Revendications

1. Récipient (1) isolé thermiquement, en particulier boîte réfrigérante, boîte chauffante ou sac thermique électrique, avec des zones de côté (5) et de fond (4) ainsi qu'au moins une zone de couvercle (3) ou de fermeture,
avec un dispositif thermique (2) actionné électriquement, et
avec un câble conducteur électrique pour l'alimentation en énergie électrique,
***caractérisé en ce que***
le récipient (1) comprend un dispositif (10) de retrait automatique et de rangement compact du câble sorti à l'intérieur de la forme périphérique du récipient (1).

2. Récipient selon la revendication 1,
***caractérisé en ce que***
le dispositif thermique est réalisé en dispositif réfrigérant et/ou chauffant, en particulier en dispositif à effet Peltier.

3. Récipient selon l'une quelconque des revendications 1 ou 2,
***caractérisé en ce que***
le dispositif (10) de retrait et rangement du câble est réalisé modulaire.

4. Récipient selon l'une quelconque des revendications 1 à 3,
***caractérisé en ce que***
le dispositif (10) de retrait et rangement du câble comprend un accumulateur d'énergie qui accumule de l'énergie lors de l'extraction du câble, énergie qui est prévue comme énergie de retrait pour le câble.

5. Récipient selon l'une quelconque des revendications 1 à 4,
***caractérisé en ce qu'***
un dispositif d'actionnement est prévu pour le retrait automatique.

6. Récipient selon l'une quelconque des revendications 1 à 5,
***caractérisé en ce que***
l'accumulateur d'énergie est réalisé sous forme de dispositif à ressort et/ou de dispositif élastomère.

7. Récipient selon l'une quelconque des revendications 1 à 6,
***caractérisé en ce que***
le module du dispositif (10) de retrait et rangement comprend un transformateur de courant, de tension et/ou de fréquence.

8. Récipient selon l'une quelconque des revendications 1 à 7,
***caractérisé en ce que***
le module du dispositif (10) de retrait et rangement présente une épaisseur inférieure ou égale à celle de la paroi de la zone de fond (4) ou de couvercle (3) ou des zones de côté (5) du récipient (1).

9. Récipient selon l'une quelconque des revendications 1 à 8,
***caractérisé en ce que***
le module du dispositif (10) de retrait et rangement est placé ou intégré dans ou sur la zone de côté (5), de fond (4) ou de couvercle (3).

10. Récipient selon l'une quelconque des revendications 1 à 9,
***caractérisé en ce que***
le module du dispositif (10) de retrait et rangement est intégré dans la zone de lisière du couvercle (3) ou du fond (4).

11. Récipient selon l'une quelconque des revendications 1 à 9,
***caractérisé en ce que***
le module du dispositif (10) de retrait et de rangement est réalisé d'une façon rapportable, en particulier enfichable, sur le récipient (1).

12. Récipient selon l'une quelconque des revendications 1 à 11,
***caractérisé en ce que***
le module (10) est réalisé sous la forme d'un rouleau de câble relativement plat avec dispositif d'enroulement par traction sur le câble.

13. Récipient selon l'une quelconque des revendications 1 à 12,
***caractérisé en ce que***
le dispositif thermique (2) est conformé en dispositif réfrigérant.
